# FASCICULE DE BREVET EUROPEEN

(11) **EP 3 762 296 B1**
(45) Date de publication et mention de la délivrance du brevet: **09.11.2022**
(21) Numéro de dépôt: 19709458.4
(22) Date de dépôt: 05.03.2019
(51) Int. Cl.: B64F 1/28, B67D 7/42

(54) **DISPOSITIF D'AVITAILLEMENT D'UN AÉRONEF ET PROCÉDÉ DE FABRICATION D'UN ACCROCHEUR D'AILE POUR UN TEL DISPOSITIF**
FLUGZEUGBETANKUNGSVORRICHTUNG UND VERFAHREN ZUR HERSTELLUNG EINER FLÜGELKOPPLUNG FÜR SOLCH EINE VORRICHTUNG
AIRCRAFT REFUELLING DEVICE AND METHOD FOR MANUFACTURING A WING COUPLING FOR SUCH A DEVICE

(30) Priorité: 06.03.2018 FR 1851927
(43) Date de publication de la demande: 13.01.2021
(73) Titulaire: DESAUTEL, 69003 Lyon (FR)
(72) Inventeur: BECK, Claude, 33200 BORDEAUX (FR)
(74) Mandataire: Lavoix
(86) Numéro de dépôt international: PCT/EP2019/055443
(87) Numéro de publication internationale: WO 2019/170671

(56) Documents cités:
- EP-A1- 0 935 750
- EP-A1- 2 952 434
- WO-A1-2008/121325
- WO-A2-2010/128246

## Description

L'invention a trait à un dispositif d'avitaillement d'un aéronef ainsi qu'à un procédé de fabrication d'un accrocheur d'aile utilisé dans un tel dispositif d'avitaillement.

Sur les aéroports et les aérodromes civils et militaires, il est connu d'utiliser des dispositifs d'avitaillement que l'on déplace à proximité des aéronefs pour procéder au remplissage en carburant de leur réservoir.

Ainsi, WO-A-2010/128246 divulgue un engin d'avitaillement dont l'accrocheur d'aile est équipé d'un capteur permettant de déterminer la valeur d'un paramètre, tel que la pression, d'un écoulement de carburant traversant cet accrocheur d'aile. Ce dispositif donne satisfaction.

En variante, le capteur peut être utilisé avec un ou plusieurs autres paramètres de l'écoulement, notamment sa température ou son débit.

Dans ce genre de matériel, le capteur doit être intégré à l'accrocheur d'aile, tout en étant protégé mécaniquement contre les chocs et les agressions extérieures, notamment les projections d'eau de pluie ou de produits de dégivrage par exemple.

D'autre part, les accrocheurs d'aile sont des matériels dont l'autorisation d'emploi est liée à des essais très stricts. On comprend que la moindre modification technique structurelle du corps d'un accrocheur d'aile ou de ses mécanismes internes doit être l'objet d'évaluations poussées, avant nouvel usage sous aéronefs.

C'est à cette problématique qu'entend plus particulièrement répondre la présente invention en proposant un nouveau dispositif d'avitaillement dont l'accrocheur d'aile inclut un capteur et qui peut être fabriqué de façon fiable et économique, sans induire de modification structurelle du corps de l'accrocheur d'aile, ou de ses mécanismes internes.

A cet effet, l'invention concerne un dispositif d'avitaillement d'un aéronef, ce dispositif comprenant un conduit de circulation de carburant dont l'extrémité aval est équipée d'un accrocheur d'aile pour son raccordement sur un orifice d'entrée d'un réservoir de carburant d'un aéronef. L'accrocheur d'aile comprend un corps, un capteur de mesure de la valeur d'un paramètre représentatif d'un écoulement de carburant transitant par l'accrocheur d'aile du conduit de circulation de carburant vers le réservoir de carburant de l'aéronef et au moins une batterie d'alimentation électrique de ce capteur. Conformément à l'invention, le capteur et la batterie d'alimentation électrique sont logés dans deux demi-coquilles montées ensemble de façon amovible autour du corps de l'accrocheur d'aile.

Grâce à l'invention, les deux demi-coquilles peuvent contenir les éléments nécessaires à la mise en œuvre du capteur de mesure, c'est-à-dire le capteur lui-même et sa batterie d'alimentation électrique. Ainsi, la fonction de mesure de la valeur du paramètre est réalisée sous la forme d'un sous-ensemble ou module constitué des deux demi-coquilles qui peut être intégré ou non à l'accrocheur d'aile, selon que cette fonction est nécessaire. Cette approche permet également d'équiper des accrocheurs d'aile de dispositifs d'avitaillement existants, c'est-à-dire de « rétrofitter » ces dispositifs, de façon particulièrement simple et sans altérer les propriétés mécaniques et fluidiques du corps de l'accrocheur d'aile.

Selon des aspects avantageux mais non obligatoires de l'invention, un tel dispositif d'avitaillement peut incorporer une ou plusieurs des caractéristiques suivantes prises selon toute combinaison techniquement admissible :
- Le capteur est monté dans une première demi-coquille et la batterie est montée dans la deuxième demi-coquille.
- Des organes de connexion électriques entre le capteur et la batterie sont prévus dans une zone d'interface entre les deux demi-coquilles.
- Chaque demi-coquille est bi-partite et comprend une partie principale, qui définit des logements creux de réception de composants électroniques, et un couvercle.
- Sur leurs surfaces radiales internes respectives, les parties principales et/ou les couvercles sont chacun pourvus d'une gorge de réception d'un conducteur électrique.
- Les deux demi-coquilles sont reliées entre elles par des organes de serrage de ces demi-coquilles sur le corps de l'accrocheur d'aile.
- Les deux demi-coquilles ont une couleur différente de celle du corps de l'accrocheur d'aile, notamment une couleur fluorescente.
- Un module d'émission, vers un récepteur distant, d'un signal contenant la valeur du paramètre mesurée par le capteur est également logé dans une des demi-coquilles, laquelle est réalisée dans un matériau qui n'interfère pas avec le signal émis par le module d'émission, notamment en matériau synthétique, de préférence en matériau plastique.
- Le dispositif d'avitaillement comprend également au moins un organe de détection de la position d'une soupape frontale mobile par rapport au corps, ainsi qu'un système électrique ou électronique de transmission, vers une unité de contrôle, d'un signal représentatif de la position de la soupape frontale détectée par l'organe de détection, alors que l'organe de détection et les moyens de transmission sont également chacun logés dans l'une des demi-coquilles.
- Chaque demi-coquille comporte au moins un logement creux pour l'agencement d'un composant, parmi le capteur, la batterie d'alimentation et, le cas échéant, le module d'émission.

Selon un autre aspect, l'invention concerne un procédé de fabrication d'un dispositif d'avitaillement tel que mentionné ci-dessus. Ce procédé comprend une étape consistant à monter autour du corps de l'accrocheur d'aile deux demi-coquilles dans lesquelles sont logés le capteur de mesure de la valeur d'un paramètre représentatif de l'écoulement de carburant transitant par cet accrocheur d'aile, ainsi que la batterie d'alimentation électrique de ce capteur.

L'invention sera mieux comprise et d'autres avantages de celle-ci apparaîtront plus clairement à la lumière de la description qui va suivre de trois modes de réalisation d'un dispositif d'avitaillement et d'un procédé de fabrication conformes à l'invention, donnée uniquement à titre d'exemple et faite en référence aux dessins annexés, dans lesquels :
- la figure 1 est une représentation schématique de principe d'un engin d'avitaillement incluant un dispositif d'avitaillement conforme à l'invention en cours d'utilisation pour remplir le réservoir d'un aéronef en carburant
- la figure 2 est une vue en élévation d'un accrocheur d'aile et d'une partie d'un conduit de circulation de carburant appartenant au dispositif d'avitaillement représenté à la figure 1 ;
- la figure 3 est une vue partiellement en coupe axiale, selon la ligne III-III à la figure 2 ;
- la figure 4 est une vue en perspective de l'accrocheur d'aile seul, dans la configuration des figures 2 et 3 ;
- la figure 5 est une vue en perspective selon un autre angle de l'accrocheur d'aile seul, dans la configuration des figures 2 à 4 ;
- la figure 6 est une vue analogue à la figure 2 lorsque l'accrocheur d'aile est dans une deuxième configuration d'utilisation ;
- la figure 7 est une vue partiellement en coupe axiale, selon la ligne VII-VII à la figure 6 ;
- la figure 8 est une vue en perspective de l'accrocheur d'aile seul, dans la configuration des figures 6 et 7 ;
- la figure 9 est une vue en perspective selon un autre angle de l'accrocheur d'aile seul, dans la configuration des figures 6 à 8 ;
- la figure 10 est une vue en perspective éclatée d'un ensemble de deux demi-coquilles appartenant à l'accrocheur d'aile des figures 2 à 9 ;
- la figure 11 est une vue en perspective selon un autre angle d'un premier composant de l'ensemble de deux-demi coquilles de la figure 10 ;
- la figure 12 est une vue en perspective selon un autre angle d'un deuxième composant de l'ensemble de deux-demi coquilles de la figure 10 ;
- la figure 13 est une vue en perspective selon un autre angle d'un troisième composant de l'ensemble de deux-demi coquilles de la figure 10 ;
- la figure 14 est une vue en perspective selon un autre angle d'un quatrième composant de l'ensemble de deux-demi coquilles de la figure 10 ;
- la figure 15 est une vue analogue à la figure 2, pour un dispositif conforme à un deuxième mode de réalisation de l'invention ; et
- la figure 16 est une vue analogue à la figure 2, pour un dispositif conforme à un troisième mode de réalisation de l'invention, le levier de commande de la position de la soupape frontale étant omis, pour la clarté du dessin.

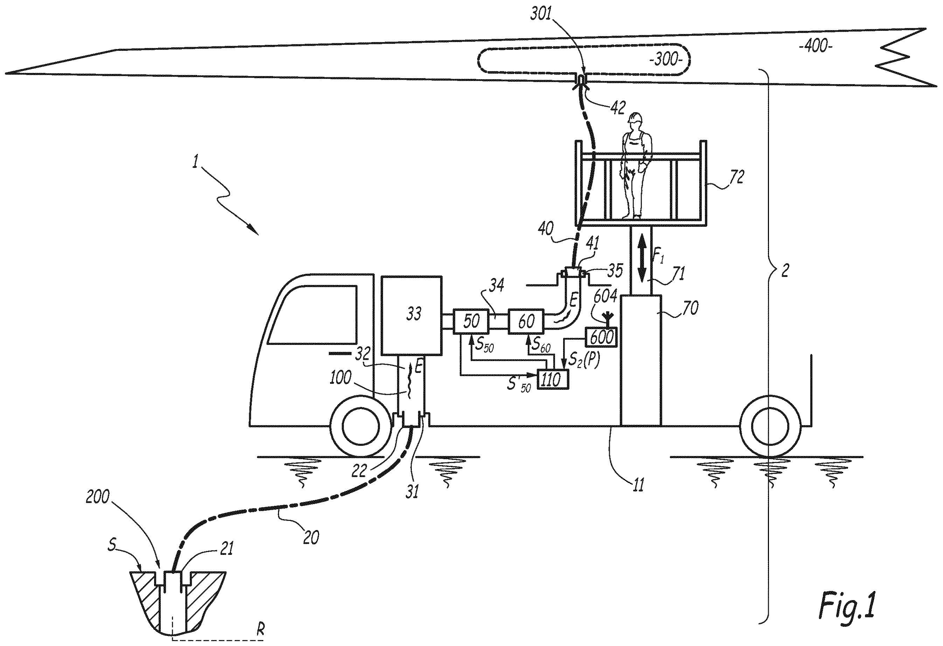

L'engin d'avitaillement ou oléoserveur 1 représenté à la figure 1 se présente globalement sous la forme d'un véhicule industriel équipé d'un tuyau flexible 20 permettant de le raccorder sur une bouche de sortie 200 appartenant à un réseau fixe R de distribution de carburant dans un aéroport. La bouche 200 est disposée sous la surface S du sol, au voisinage d'un emplacement de stationnement d'un aéronef 400. Le tuyau 20 est équipé d'un connecteur 21 de raccordement sur la bouche 200. A son extrémité opposée au connecteur 21, le tuyau 20 est équipé d'un autre connecteur 22 de raccordement sur un connecteur 31 constituant l'embouchure d'un conduit 32 fixe de l'engin 1. En d'autres termes, le tuyau 20 permet de raccorder la bouche de sortie 200 qui appartient au réseau fixe R, au conduit 32, qui appartient à l'engin 1.

Le conduit 32 débouche dans un filtre 33 prévu pour débarrasser le carburant des résidus, notamment aqueux, qu'il peut contenir.

En aval du filtre 33, un conduit 34 s'étend jusqu'à un connecteur 35 sur lequel est raccordé un connecteur amont 41 d'un second tuyau flexible 40. Un accrocheur d'aile 42 est raccordé sur l'extrémité aval 43 du second tuyau flexible 40 et constitue un moyen de branchement du tuyau 40 sur un orifice d'entrée 301 d'un réservoir 300 intégré à l'aile 400 d'un avion.

Selon un aspect optionnel de l'invention qui n'est pas représenté pour la clarté du dessin, mais qui est habituel en pratique, un doublement du second tuyau flexible 40 et de l'accrocheur d'aile 42 est envisageable.

Pour la clarté des dessins, les tuyaux flexibles 20 et 40 sont représentés, à la figure 1, par des traits d'axes correspondant à leurs axes longitudinaux respectifs.

Les pièces 20 à 42 appartiennent à un dispositif d'avitaillement 2 qui fait partie de l'engin 1.

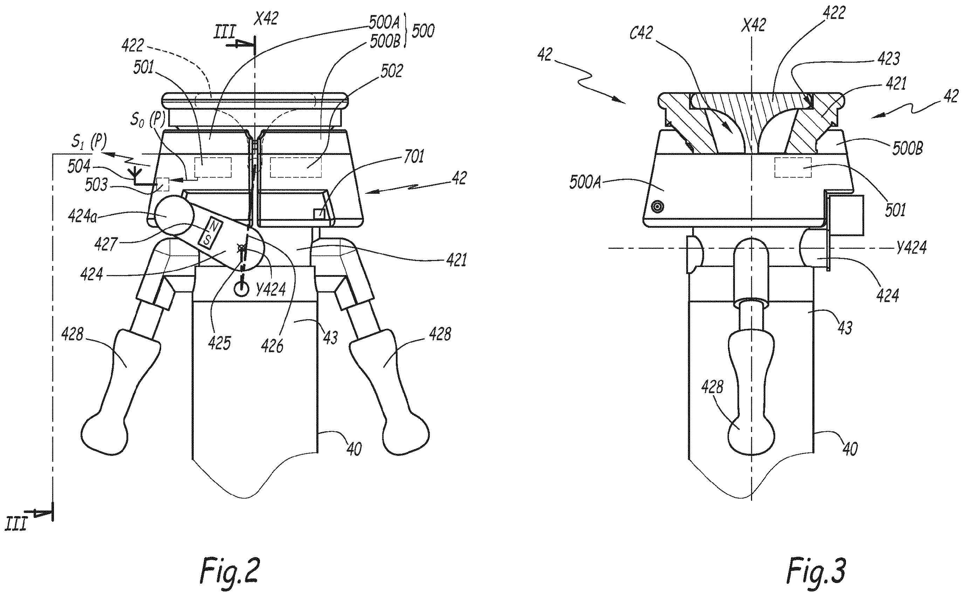

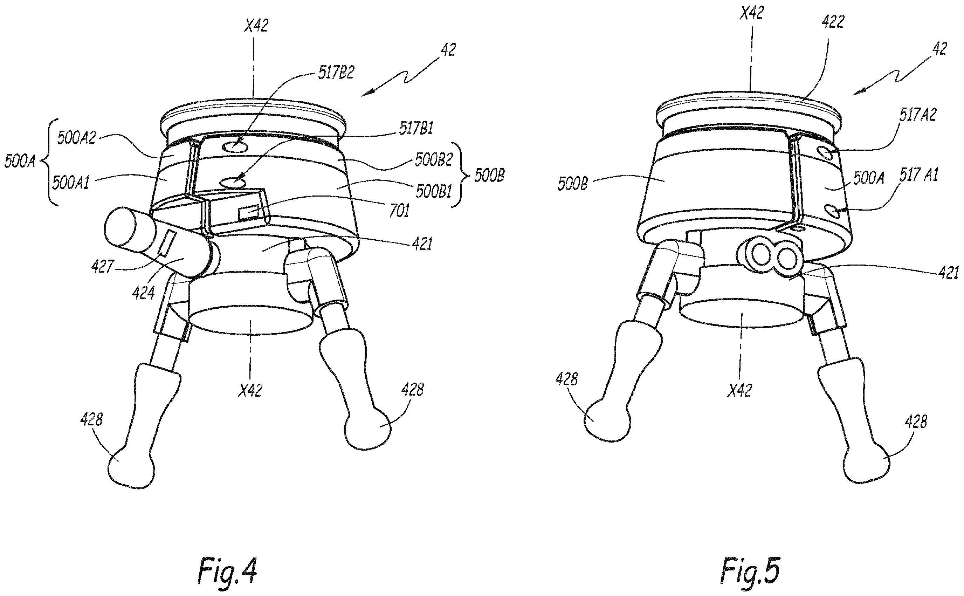

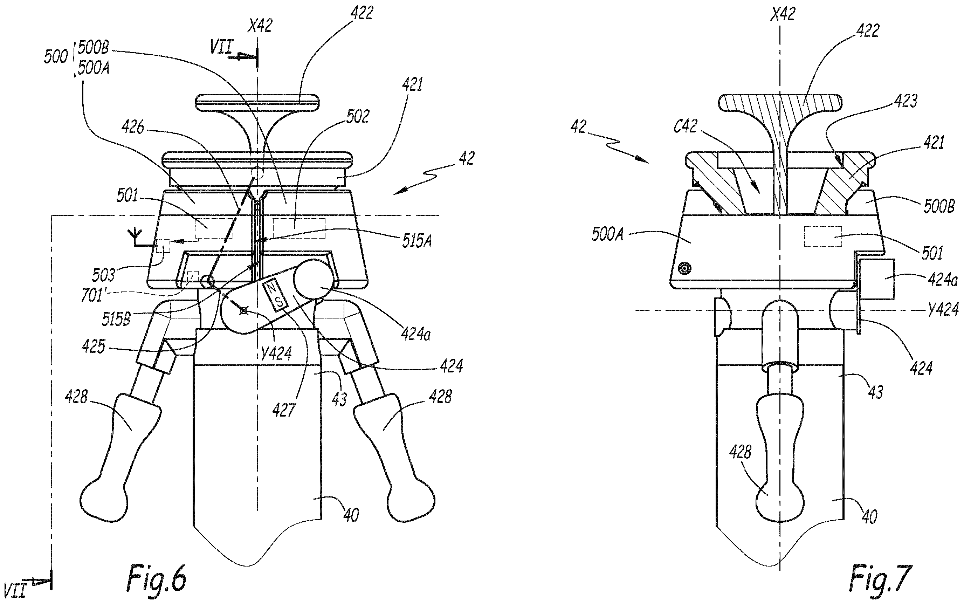

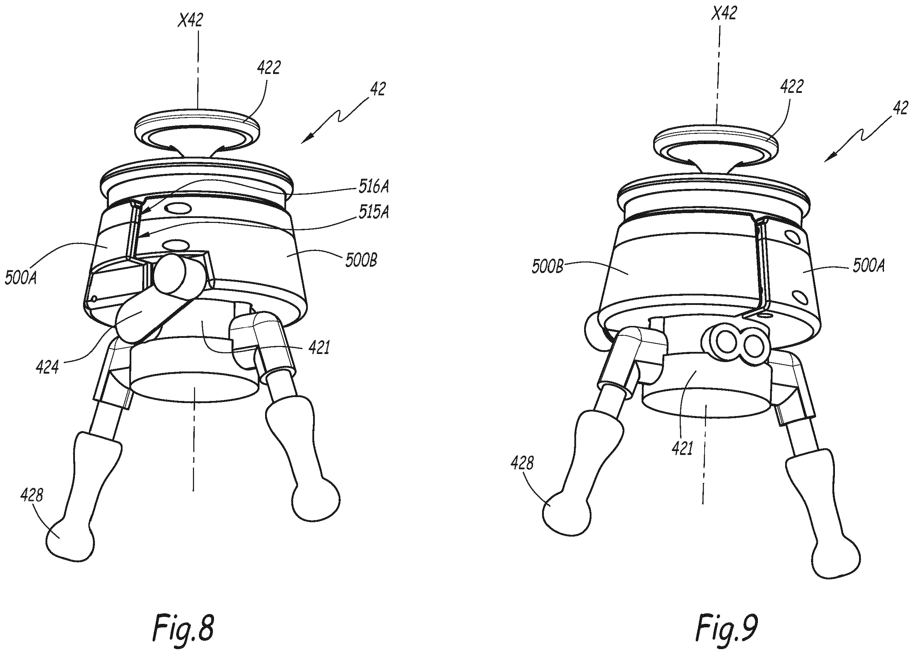

L'accrocheur d'aile 42 comprend un corps cylindrique 421 équipé d'une bague, non représentée et connue en soi, de préférence au profil international ISO45, permettant son verrouillage par coopération de formes sur un connecteur correspondant, également non représenté et connu en soi, délimitant l'orifice 301. L'accrocheur d'aile 42 est également pourvu d'une soupape 422, dite frontale, qui est mobile en translation selon un axe longitudinal X42 de l'accrocheur d'aile 42, entre une première position fermée représentée aux figures 2 à 5, où cette soupape frontale 422 est en appui contre un siège 423 formé par le corps 421, et une deuxième position ouverte représentée aux figures 6 à 9, où la soupape frontale 422 est écartée du siège 423.

Dans sa première position fermée, la soupape frontale 422 empêche l'écoulement de carburant du tuyau flexible 40 vers le réservoir 300. Dans sa deuxième position ouverte, la soupape frontale 422 autorise un tel écoulement, notamment au sein d'un canal C42 défini à l'intérieur du corps 421 autour de la soupape frontale 422.

La manoeuvre de la soupape frontale 422 entre ses première et deuxième positions est effectuée à l'aide d'un levier 424 qui est monté pivotant sur le corps 421 autour d'un axe Y424 perpendiculaire à l'axe longitudinal X42. Le levier 424 est mobile autour de l'axe Y424 entre les deux positions extrêmes représentées respectivement aux figures 2 à 5, d'une part, et aux figures 6 à 9, d'autre part. Un ensemble de bielles 425 et 426 articulées, représentées de façon très schématique, par transparence, aux figures 2 et 6, relie le levier 424 à la soupape 422 et transforme le mouvement de rotation du levier 424, autour de l'axe Y424, en un mouvement de translation de la soupape frontale, le long de l'axe X42.

Il peut ici être fait usage de l'enseignement technique de US-A-4 567 924 qui est incorporé dans la présente description par référence. D'autres systèmes de transmission de mouvement entre le levier 424 et la soupape frontale 422 sont également envisageables.

Le levier 424 est équipé d'une poignée 424a de prise en main, qui permet d'exercer un couple d'entraînement en rotation de ce levier autour de l'axe Y424.

Le corps 421 est, quant à lui, équipé de deux poignées 428 de manipulation, qui permettent à un opérateur de l'approcher de l'orifice 301 ou de l'éloigner de celui-ci, respectivement en début et en fin d'avitaillement. L'accrocheur d'aile 42 est verrouillé sur l'orifice 301 et déverrouillé par rapport à celui-ci par rotation autour de l'axe X42, respectivement en début et en fin d'avitaillement.

En variante, les deux poignées 428 sont remplacées par un volant.

Les éléments 32 à 34 définissent ensemble un trajet fixe d'écoulement du carburant, entre deux lignes flexibles constituées respectivement par les tuyaux 20 et 40. Ce trajet d'écoulement fixe et ces lignes flexibles s'étendent entre le connecteur 21 de branchement sur le réseau R et l'accrocheur d'aile 42 de branchement sur l'orifice 301, au sein du dispositif d'avitaillement 2.

On note E l'écoulement de carburant entre la bouche 200 et le réservoir 300.

Le dispositif d'avitaillement 2 est équipé d'un compteur 50 qui permet de mesurer la quantité de carburant transitant par le conduit 34 du fait de l'écoulement E, c'est-à-dire la quantité de carburant délivrée au réservoir 300. Le dispositif d'avitaillement 2 comporte également un régulateur de pression 60 qui permet de contrôler la pression de l'écoulement E dans la portion d'aval du conduit 34.

Une unité électronique 110 appartenant au dispositif d'avitaillement 2 est montée sur le châssis de l'engin 1 et contrôle, par des signaux électroniques adaptés S₅₀ et S₆₀, respectivement le compteur 50 et le régulateur de pression 60. Le compteur 50 fournit, quant à lui, à l'unité 110, un signal S'₅₀ représentatif du comptage qu'il effectue.

L'engin 1 porte un vérin hydraulique 70 dont la tige 71 est équipée d'une plateforme 72 sur laquelle se tient un opérateur qui peut manipuler la partie aval du tuyau 40, notamment l'accrocheur d'aile 42. La tige 71 permet à l'opérateur, par son mouvement vertical ascendant ou descendant représenté par la double flèche F₁, d'accéder à l'orifice d'entrée 301.

Un module 500, qui appartient également au dispositif d'avitaillement 2, est disposé autour du corps 421 de l'accrocheur d'aile 42. Ce module 500 se présente sous la forme de deux demi-coquilles 500A et 500B qui enserrent le corps 421. Le module 500 comprend une cellule 501 de mesure de la pression de l'écoulement E juste avant sortie de l'accrocheur d'aile 42. La cellule 501 est logée dans la demi-coquille 500A.

Compte tenu de l'emplacement du module 500 qui est à proximité immédiate de l'accrocheur d'aile 42, la cellule 501 permet de connaître, avec un degré de précision satisfaisant, la pression de l'écoulement E lorsqu'il pénètre dans le réservoir 300, à travers l'orifice 301. En d'autres termes, l'emplacement du module 500, au niveau du moyen de raccordement formé par l'accrocheur d'aile 42, permet à la cellule 501 de donner une valeur représentative de la pression P de l'écoulement E transitant à travers l'accrocheur d'aile 42 quand il pénètre dans le réservoir 300. La cellule 501 forme, à ce titre, un capteur de mesure de la valeur de cette pression.

Dans l'exemple, le module 500 est au voisinage de la soupape frontale 422, de sorte que la distance entre la cellule 501 et le point de transfert du carburant du système d'avitaillement vers l'aéronef est inférieure à 10 cm. Le point de transfert du carburant est défini à la sortie de l'accrocheur d'aile 42 comme le point où la propriété du carburant passe de la compagnie fournissant le carburant à la compagnie exploitante de l'aéronef.

La cellule 501 est alimentée en énergie électrique à partir d'une batterie 502, logée dans la demi-coquille 500B. Des conducteurs électriques non représentés s'étendent entre les demi-coquilles 500A et 500B pour relier entre elles la cellule 501 et la batterie 502.

La cellule 501 est raccordée électriquement à un émetteur radio 503 également logé dans la demi-coquille 500A et alimenté par la batterie 502. La cellule 501 fournit à l'émetteur 503 un signal électronique S₀(P) correspondant à la valeur de la pression qu'elle mesure.

L'émetteur 503 est équipé d'une antenne 504 qui lui permet d'émettre un signal non filaire S₁(P) incluant des données correspondant à la valeur de la pression P mesurée par la cellule 501. A titre d'exemple, le mode de transmission du signal S₁(P) peut être assuré par radio fréquence mais, en variante, il peut se faire par infra-rouge. La demi-coquille 500A contient les composants électroniques de mesure et de transmission de données, formés respectivement par la cellule 501 et par l'émetteur 503. Cette demi-coquille 500A contient également une carte électronique 507 de commande des éléments 501 et 503. A ce titre, la demi-coquille 500A peut être qualifiée de « demi-coquille électronique » car elle comprend les éléments électroniques de mesure et de transmission.

De son côté, la demi-coquille 500B inclut des éléments de puissance formés, d'une part, par la batterie 502 et, d'autre part, par une carte électronique 508 de régulation de la puissance électrique délivrée par la batterie 502. A ce titre, la demi-coquille 500B peut être qualifiée de « demi-coquille de puissance ».

La demi-coquille électronique 500A est bipartite. Elle comprend une partie principale 500A1 qui définit un premier logement creux 551 dans lequel sont agencés les composants électroniques 501 et 503 et un deuxième logement creux 557 dans lequel est agencée la carte électronique 507. La demi-coquille 500A comprend également un couvercle 500A2 sur lequel sont montés les composants 501, 503 et 507. L'assemblage de la demi-coquille 500A a lieu en plaquant le couvercle 500A2 sur la partie principale 500A1 dans une position d'insertion des composants électroniques 501, 503 et 507 respectivement dans les logements 551 et 557.

Le matériau constitutif de la partie principale 500A1 est choisi pour que celui-ci ne perturbe pas le signal S₁(P) émis par l'émetteur 503. Ce matériau peut être un matériau synthétique, de préférence un matériau plastique, tel que du polyuréthane additivé résistant aux agressions extérieures, dont les rayonnements U.V., compatible avec les hydrocarbures et mécaniquement résistant aux chocs.

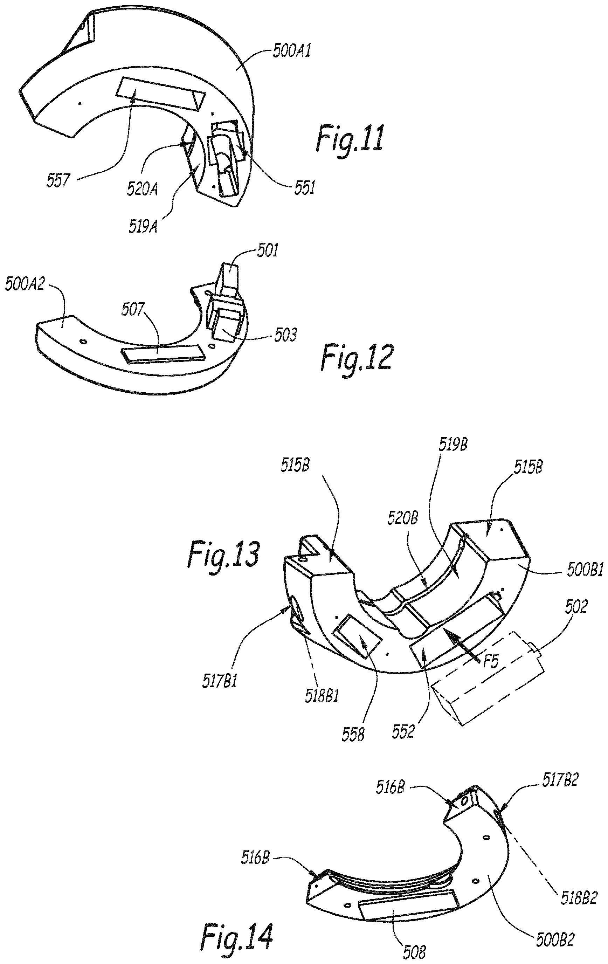

La demi-coquille de puissance 500B est également bipartite et comprend une partie principale 500B1 et un couvercle 500B2. La partie principale 500B1 comprend un premier logement creux 552 dans lequel est agencée la batterie 502 et un deuxième logement creux 558 dans lequel est agencée la carte électronique 508. La batterie 502 est représentée en traits mixtes à la figure 13, en regard de son emplacement 552. L'assemblage de la demi-coquille 500B a lieu en introduisant la batterie 502 dans le logement 552, dans le sens de la flèche F5 à la figure 13 puis en plaquant le couvercle 500B2 sur la partie principale 500B1 dans une configuration d'engagement de la carte électronique 508 dans le logement 558.

Le matériau constitutif de la partie principale 500B1 peut être choisi pour protéger efficacement la batterie 502 et la carte électronique 508 contre les chocs. Il peut notamment s'agir de métal ou d'un matériau synthétique chargé en fibres, par exemple en fibres de verre.

Le matériau des couvercles 500A2 et 500B2 peut être le même que celui de la partie principale à laquelle ils sont associés, ou un matériau différent.

Dans tous les cas, le ou les matériaux sélectionnés pour constituer les parties 500A1, 500A2, 500B1 et 500B2 sont choisis résistant aux chocs, aux hydrocarbures et aux ultraviolets.

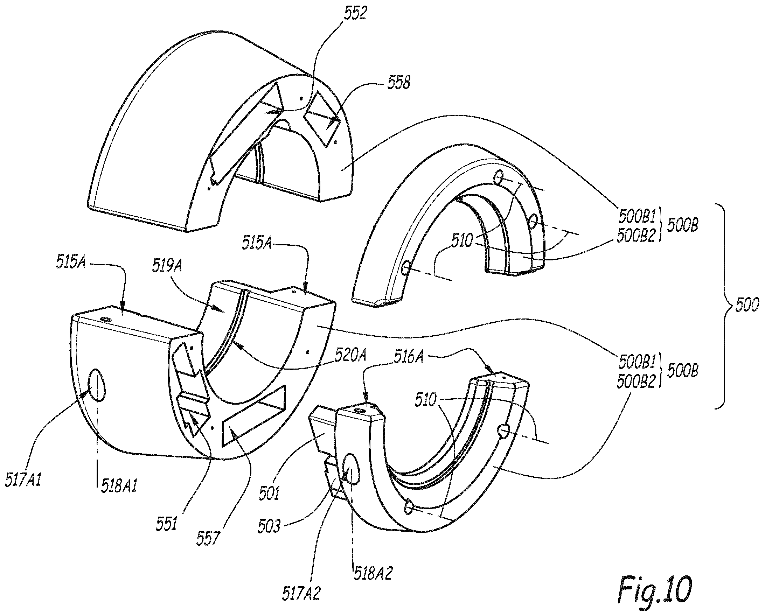

Les couvercles 500A2 et 500B2 sont respectivement fixés sur les parties principales 500A1 et 500B1 au moyen de vis 510 représentés par leurs traits d'axe respectifs à la figure 10.

En configuration assemblée du module 500 autour du corps 421, les demi-coquilles 500A et 500B s'étendent chacune respectivement sur environ 180° autour de l'axe longitudinal X42 et présentent chacune la forme d'une demi-bague.

La demi-coquille électronique 500A définit quatre surfaces élémentaires dont deux surfaces élémentaires 515A définies par la partie principale 500A1 et deux surfaces élémentaires 516A définies par le couvercle 500A2. Ces surfaces élémentaires sont planes et alignées les unes avec les autres en configuration montée de la demi-coquille 500A. De la même façon, la demi-coquille 500B2 définit quatre surfaces élémentaires qui sont planes et alignées les unes avec les autres en configuration montée, à savoir deux surfaces élémentaires 515B formées par la partie principale 500B1 et deux surfaces élémentaires 516B définies par le couvercle 516B2.

En configuration assemblée du module 500 autour du corps 421, les surfaces 515A sont parallèles à l'axe X42 et disposées en regard des surfaces 515B, alors que les surfaces 516A sont parallèles à l'axe X42 et disposées en regard des surfaces 516B.

L'assemblage des demi-coquilles 500A et 500B autour du corps 421 a lieu grâce à des vis 518A1 et 518B1 qui sont respectivement engagées dans des logements 517A1 et 517B1 prévus sur les parties principales 500A1 et 500B1, ces vis 518A1 et 518B1 traversant les surfaces 515A et 515B pour pénétrer dans la demi-coquille opposée. L'assemblage des demi-coquilles 500A et 500B autour du corps 421 a également lieu grâce à des vis 518A2 et 518B2 qui sont respectivement engagées dans des logements 517A2 et 517B2 prévus respectivement sur les couvercles 500A2 et 500B2, ces vis 518A2 et 518B2 traversant les surfaces 516A et 516B pour pénétrer dans la demi-coquille opposée. Les vis 518A1, 518A2, 518B1 et 518B2 sont représentées par leurs traits d'axe respectifs aux figures 10, 13 et 14.

En variante, les demi-coquilles 500A et 500B peuvent être solidarisées l'une avec l'autre autour du corps 421 par coopération de formes. L'assemblage des demi-coquilles 500A et 500B entre elles par des vis présente l'avantage d'être amovible, en d'autres termes réversible, ce qui facilite les opérations de maintenance de l'accrocheur d'aile 42.

Les vis présente en outre l'avantage de permettre un serrage des demi-coquilles 500A et 500B autour du corps 421.

Le montage des demi-coquilles 500A et 500B autour du corps 421 modifie l'aspect extérieur de l'accrocheur d'aile 42, ce qui permet de différencier au premier coup d'œil un accrocheur d'aile 42 équipé d'une cellule 501 de mesure de la pression de l'écoulement E d'un accrocheur d'aile dépourvu d'une telle cellule.

En outre, afin de faciliter ce repérage, les éléments 500A1, 500A2, 500B1 et 500B2 peuvent être peints ou réalisés dans un matériau coloré, avec une couleur différente de celle du corps 421, en particulier une couleur fluorescente. Ceci rend encore plus apparent le module 500. Ceci attire l'attention de l'opérateur sur le fait que l'accrocheur d'aile 42 ainsi équipé doit être manipulé avec certaines précautions, afin de ne pas endommager les composants électroniques 501, 503 et 507 et les composants de puissance 502 et 508.

Des conducteurs électriques s'étendent au sein de et entre les demi-coquilles 500A et 500B afin de relier la source d'énergie formée par la batterie 502 aux charges électriques formées par le capteur 501, l'émetteur 503 et les cartes électroniques 507 et 508. Ces câbles électriques ne sont pas représentés, pour la clarté du dessin.

Des moyens de connexion électrique entre la cellule 501 et la batterie 502 sont prévus à l'interface entre les demi-coquilles 500A et 500B, en particulier au niveau des surfaces 515A et 515B. Ces organes de connexion électrique ne sont pas représentés pour la clarté du dessin. Il peut s'agir de prises ou de broches connues en soi. Le courant circulant dans ces fils est extrêmement faible car un dispositif de limitation existe au départ des piles ou accumulateur. De préférence, le niveau d'énergie circulant dans ces fils conducteurs reliant électriquement chaque demi-coquille ne permet pas la production d'une étincelle dont l'énergie pourrait enflammer une atmosphère explosive.

Sur leurs surfaces radiales internes respectives 519A et 519B, les parties principales 500A1 et 500B1 sont chacune pourvues d'une gorge 520A, 520B de réception d'un conducteur électrique qui n'est pas représenté, mais qui peut servir à la liaison entre, d'une part, la batterie 502 et son dispositif de limitation de courant et, d'autre part, les autres composants ou à la liaison électrique entre ces autres composants. En variante ou en complément, une gorge du même type peut être prévue sur la surface radiale interne d'un couvercle 500A2 ou 500B2.

Des moyens de connexion électrique entre la cellule 501 et la batterie 502 sont prévus à l'interface entre les demi-coquilles 500A et 500B, en particulier au niveau des surfaces 515A et 515B. Ces organes de connexion électrique ne sont pas représentés pour la clarté du dessin. Il peut s'agir de prises ou de broches connues en soi.

Par ailleurs, le dispositif d'avitaillement est équipé d'un récepteur 600 appairé au module 500 et dont l'antenne 604 lui permet de recevoir le signal S₁(P).

Le récepteur 600 est alors en mesure de transmettre à l'unité électronique de contrôle 110 un signal S₂(P) représentatif de la pression P de l'écoulement E détectée par la cellule 501.

L'unité 110 peut alors tenir compte de la valeur de cette pression P pour piloter, notamment, le régulateur de pression 60 au moyen du signal électronique approprié S₆₀.

Pour que le capteur de pression formé par la cellule 501 fonctionne efficacement, il importe qu'il soit alimenté en énergie électrique avec un niveau suffisant, à partir de la batterie 502. Ainsi, le niveau de cette batterie 502 est critique pour le fonctionnement de l'engin 1.

Afin d'éviter que la batterie 502 se décharge lorsque l'accrocheur d'aile n'est pas utilisé, et en tenant compte du fait que la cellule 501 ne doit être alimentée que lorsqu'un écoulement E transite effectivement à travers l'accrocheur d'aile 42, on peut prévoir de conditionner l'alimentation électrique de la cellule 501 par la batterie à l'existence d'un tel écoulement E.

En tenant compte de cette approche, l'accrocheur d'aile 42 est équipé d'un organe 701 de détection de la position de la soupape 42, ce qui permet de déduire si un écoulement E est susceptible d'avoir lieu à travers l'accrocheur d'aile 42, puisque la position de la soupape frontale 422 détermine la possibilité d'un tel écoulement.

L'organe de détection 701 est intégré à la demi-coquille 500B et positionné pour détecter indirectement la position de la soupape frontale 422 en détectant la position du levier 424. En effet, comme la liaison cinématique entre le levier 424 et la soupape 422 est univoque, grâce aux bielles 425 et 426, il suffit de repérer la position du levier 424 pour en déduire celle de la soupape frontale 422.

Ceci tire parti du fait que, lors de la manipulation de l'accrocheur d'aile 422, l'opérateur est sensé manoeuvrer le levier 424 pour déplacer la soupape 422 entre ses première et deuxième positions, en début d'avitaillement, puis entre ses deuxième et première positions, en fin d'avitaillement.

L'organe de détection 701 peut être formé par un capteur de proximité capable de réagir à la présence du levier 424 dans son environnement immédiat. Ce capteur de proximité peut comprendre un contact électrique, de préférence un contact électrique sec, capable de réagir à la présence d'un organe magnétique tel qu'un aimant permanent 427 monté sur le levier 424. Par exemple, un interrupteur à lame souple ou « ILS » forme l'organe de détection 701 et est intercalé dans une ligne électrique raccordée à une unité électronique de commande, choisie parmi les unités électroniques 507 et 508 ou constituée d'une unité indépendante. L'interrupteur à lame souple 701 peut prendre une configuration ouverte ou une configuration fermée, en fonction de la présence ou non de l'aimant 427 dans son voisinage.

On considère un signal électrique S701 représentatif de l'état de l'interrupteur à lame souple 701. Ce signal électrique S701 vaut zéro lorsque l'interrupteur est ouvert et il prend une valeur non nulle, égale à l'intensité du courant circulant dans la ligne électrique précitée, lorsque l'interrupteur 701 est fermé. Ce signal électrique S701 peut être exploité, par l'unité électronique de commande 507 ou 508 ou autre, pour alimenter la cellule 501 uniquement lorsque le signal S701 est non nul, c'est-à-dire lorsque le levier 424 est dans une position correspondant à la deuxième position de la soupape frontale 422.

L'unité électronique de commande 505 peut utiliser les mêmes règles pour alimenter ou non l'émetteur 503 qui est également consommateur de courant.

L'utilisation d'un interrupteur à lame souple 701 est particulièrement avantageuse puisqu'un tel interrupteur forme un organe de détection qui ne consomme pas de courant en lui-même. Toutefois, d'autres types d'organes de détection de la position du levier 424 sont envisageables, par exemple sur la base d'un effet magnétique ou inductif, notamment à partir d'un capteur à effet Hall.

Dans l'exemple des figures 1 à 14, l'interrupteur à lame souple 701 est positionné dans la demi-coquille 500B, de telle sorte qu'il détecte le levier 424 lorsque celui-ci est dans une position correspondant à la deuxième position de la soupape frontale 422.

Une autre configuration est toutefois possible, comme représentée en traits mixtes à la figure 6 où un autre interrupteur à lame souple 701' est positionné dans la demi-coquille 500A, au voisinage du levier 424 lorsque celui-ci est dans une configuration correspondant à la première position de la soupape frontale 422.

Selon une autre variante, il est possible de prévoir deux organes de détection de la position de la soupape frontale, tels que les interrupteurs 701 et 701', respectivement au voisinage de chacune des deux positions extrêmes de la course du levier 424 qui correspondent respectivement aux première et deuxième positions de la soupape frontale 422.

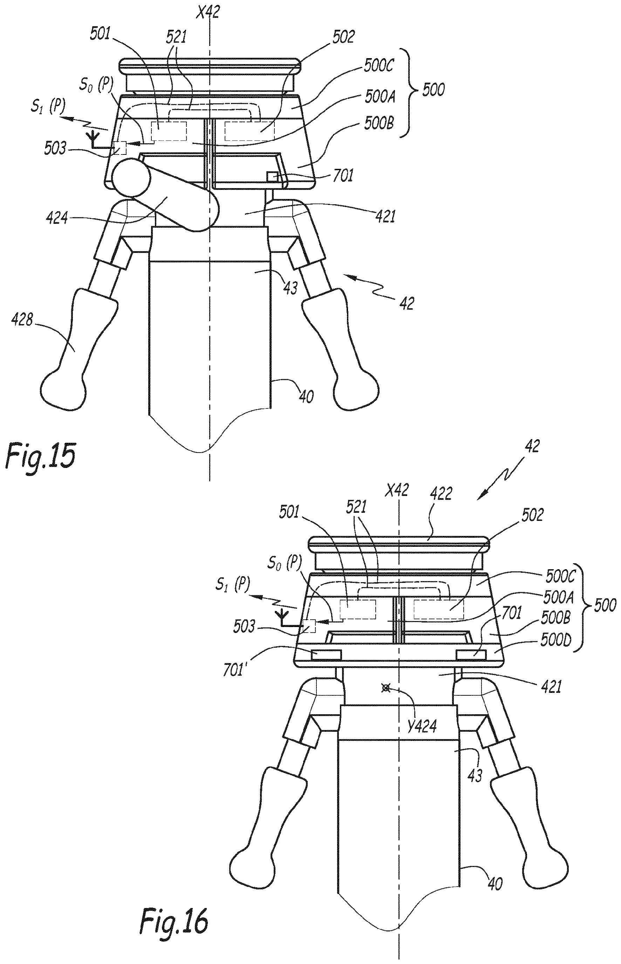

Dans les deuxième et troisième modes de réalisation de l'invention représentés respectivement aux figures 15 et 16, les éléments analogues à ceux du premier mode de réalisation portent les mêmes références. Dans ce qui suit, on décrit ce qui distingue ces modes de réalisation du précédent.

Dans le deuxième mode de réalisation de la figure 15, les deux demi-coquilles 500A et 500B sont monoblocs et formées exclusivement par des pièces respectivement analogues aux parties principales 500A1 et 500B1du premier mode de réalisation. Deux couvercles sont utilisés, avec une géométrie proche de celle des couvercles 500A2 et 500B2 mais en étant tournés de 90° autour de l'axe X42 par rapport à la configuration des couvercles du premier mode de réalisation. Un seul de ces couvercles est visible à la figure 15 avec la référence 500C. Ainsi positionné, chacun des couvercles 500C constitue un pont disposé à cheval sur les demi-coquilles 500A et 500B. Ces couvercles 500C assurent une fonction de fermeture étanche des demi-coquilles 500A et 500B, comme dans le premier mode de réalisation, tout en participant à la fiabilisation de l'assemblage mécanique entre ces parties car ils peuvent être vissés par les vis 510 chacun à la fois dans la demi-coquille 500A et dans la demi-coquille 500B. En outre, des câbles électriquement conducteurs 521 peuvent cheminer à l'intérieur de ces couvercles 500C, entre les demi-coquilles 500A et 500B, sans être exposés à l'extérieur. Les couvercles 500C appartiennent également au module 500, défini comme dans le premier mode de réalisation, en complément des demi-coquilles 500A et 500B.

Sur la figure 16, le levier de commande de la position de la soupape frontale 422 du dispositif d'avitaillement du troisième mode de réalisation, qui correspond au levier de commande 424 des autres modes de réalisation, est omis, pour la clarté du dessin Dans ce troisième mode de réalisation, on utilise des couvercles 500C comme dans le deuxième mode de réalisation, ainsi que deux embases dont une seule est visible à la figure 16 avec la référence 500D. Les embases 500D sont positionnées de façon correspondante aux couvercles 500C, à cheval sur les demi-coquilles 500A et 500B, ce qui permet, là encore, de relier mécaniquement les demi-coquilles 500A et 500B, ou de faire circuler des câbles électriquement conducteurs. Les couvercles 500C et les embases 500D appartiennent également au module 500, défini comme dans le premier mode de réalisation, en complément des demi-coquilles 500A et 500B.

Dans ce cas, le ou les organes de détection 701 et 701' sont avantageusement intégrés dans l'une des embases 500D. Des câbles électriquement conducteurs, reliant ce ou ces organes de détection aux cartes électroniques associées, peuvent circuler dans l'embase 500D en question. Dans l'exemple de la figure 16, deux interrupteurs 701 et 701' formant organes de détection sont utilisés et montés dans l'embase 500D. En variante, un seul tel interrupteur est utilisé et monté sur cette embase.

Le montage du ou des interrupteurs 701 et/ou 701' sur une embase 500D permet de rendre optionnelle leur utilisation. En effet, si l'on a besoin d'un organe de détection de la position de la soupape frontale 422, on peut utiliser une embase 500D équipée d'interrupteurs à lame souple. Dans le cas contraire, on peut utiliser une embase dépourvue de tels interrupteurs.

Dans les deuxième et troisième modes de réalisation, les couvercles 500C et, éventuellement, les embases 500D peuvent être massifs et comprendre des canaux de circulation de pistes ou de fils conducteurs reliant entre eux des composants électroniques et/ou la batterie 502. En outres des composants électroniques peuvent être montés dans ces parties 500C et 500D. Ceci concerne notamment les interrupteurs 701 et 701' comme envisagé ci-dessus, sans être limité à ces seuls composants.

Dans les deuxièmes et troisièmes modes de réalisation, les deux couvercles 500C et, le cas échéant, les deux embases 500D peuvent être monoblocs. Dans ce cas, le module 500 du deuxième mode de réalisation est formé de trois pièces, au lieu de quatre dans la version mentionnée ci-dessus, et celui du troisième mode de réalisation est formé de quatre pièces, au lieu de six dans la version mentionnée ci-dessus.

En variante, l'un des couvercles 500C, le couvercle unique 500C, l'une des embases 500D ou l'embase unique 500D peut incorporer un lecteur de code RFID.

Selon une autre variante l'un des couvercles 500C, le couvercle unique 500C, l'une des embases 500D ou l'embase unique 500D peut incorporer une ou plusieurs antennes, notamment l'antenne 504.

Les parties 500A, 500B, 500C et 500D peuvent être pleines, avec seulement les logements 551, 552, 557, 558 et équivalents, ou ajourées avec des volumes creux définis autour de ces logements. Dans ce dernier cas, les volumes creux sont avantageusement comblés avec d'un matériau de remplissage, de type silicone ou élastomère, afin d'éviter l'accumulation d'une atmosphère potentiellement explosive.

Selon une autre variante non représentée, l'émetteur 503 peut être déporté dans une embase 500D. Dans ce cas, le matériau constitutif de la demi-coquille 500A peut être choisi sans restriction quant à la perturbation des ondes émises par cet émetteur, puisque cet émetteur est situé à l'extérieur de cette demi-coquille. Le matériau de l'embase 500D est alors adapté en conséquence.

Selon une autre variante non représentée de l'invention, les demi-coquilles 500A et 500B peuvent être dépourvues de couvercle et d'embase. Dans ce cas, les différents composants électroniques de mesure, d'émission ou de puissance peuvent être immobilisés dans des logements correspondants, prévus dans ces demi-coquilles et qui débouchent sur l'extérieur, en injectant dans ces logements et autour de ces composants une résine polymérisable.

En fait, cette technique d'immobilisation des composants dans les logements correspondants peut également être mise en œuvre dans les trois modes de réalisation représentés sur les figures, avant mise en place des couvercles 500A2, 500B2, 500C ou des embases 500D.

Quel que soit le mode de réalisation, un procédé de fabrication d'un accrocheur d'aile 42 comprend, outre des étapes de moulage/usinage du corps 421 et de montage des accessoires 422, 424 et 426 sur ce corps, une étape de montage, autour de ce corps 421, des deux demi-coquilles 500A et 500B.

Du fait de cette étape de montage, l'intégration de la cellule 501 et de la batterie 502 dans les deux demi-coquilles 500A et 500B permet d'ajouter la fonction de contrôle de la pression P, sur un accrocheur d'aile neuf ou sur un accrocheur d'aile déjà en service, dans le cadre d'un rétrofittage, sans avoir à modifier le corps 421, la soupape frontale 422 ou les poignées 426.

Dans les exemples mentionnés ci-dessus, le paramètre détecté grâce à la cellule 501 est la pression P de l'écoulement E. En variante, un ou plusieurs autres paramètres représentatifs de l'écoulement E transitant par l'accrocheur d'aile 42 peuvent être mesurés, en particulier sa température T, son débit Q ou le volume V qui traverse cet accrocheur d'aile à partir d'un instant prédéterminé, ainsi que sa densité, sa masse ou sa turbidité.

L'invention est décrite ci-dessus dans le cas où le dispositif d'avitaillement 2 est monté sur l'engin 1 et relié à un réseau d'alimentation en carburant. Elle est toutefois applicable au cas où ce dispositif est monté à poste fixe. Elle est également applicable au cas où l'engin 1 est un avitailleur équipé d'une citerne de carburant et d'une pompe.

Les caractéristiques des modes de réalisation et variantes envisagés ci-dessus peuvent être combinés entre eux pour générer de nouveaux modes de réalisation de l'invention définit par les revendications suivantes.

## Revendications

1. Dispositif (2) d'avitaillement d'un aéronef (400), ce dispositif comprenant un conduit (40) de circulation de carburant dont l'extrémité aval (43) est équipé d'un accrocheur d'aile (42) pour son raccordement sur un orifice d'entrée (301) d'un réservoir de carburant (300) de l'aéronef, l'accrocheur d'aile comprenant un corps (421), un capteur (501) de mesure de la valeur d'un paramètre (P, T, Q, V) représentatif d'un écoulement (E) de carburant transitant par l'accrocheur d'aile du conduit (40) de circulation de carburant vers le réservoir de carburant (300) de l'aéronef
et au moins une batterie (502) d'alimentation électrique de ce capteur **caractérisé en ce que** le capteur (501) et la batterie (502) d'alimentation électrique sont logés dans deux demi-coquilles (500A, 500B) montées ensemble de façon amovible autour du corps (421) de l'accrocheur d'aile (42).

2. Dispositif d'avitaillement selon la revendication 1 **caractérisé en ce que** le capteur (501) est monté dans une première demi-coquille (500A) et la batterie (502) est montée dans la deuxième demi-coquille (500B).

3. Dispositif d'avitaillement selon la revendication 2 **caractérisé en ce que** des organes de connexion électriques entre le capteur (501) et la batterie (502) sont prévus dans une zone d'interface (515A, 515B) entre les deux demi-coquilles (500A, 500B).

4. Dispositif d'avitaillement selon l'une des revendications précédentes **caractérisé en ce que** chaque demi-coquille (500A, 500B) est bi-partite et comprend une partie principale (500A1, 500B1), qui définit des logements creux (551, 552, 557, 558) de réception de composants électroniques (501, 502, 503, 507, 558), et un couvercle (500A2, 500B2).

5. Dispositif d'avitaillement selon la revendication 4 **caractérisé en ce que**, sur leurs surfaces radiales internes respectives (519A, 519B, 520A, 520B), les parties principales (500A1, 500B1) et/ou les couvercles (500A2, 500B2) sont chacun pourvus d'une gorge (520A, 520B) de réception d'un conducteur électrique.

6. Dispositif d'avitaillement selon l'une des revendications précédentes **caractérisé en ce que** les deux demi-coquilles (500A, 500B) sont reliées entre elles par des organes (518A1, 518A2, 518B1, 518B2) de serrage de ces demi-coquilles sur le corps (421) de l'accrocheur d'aile (42).

7. Dispositif d'avitaillement selon l'une des revendications précédentes **caractérisé en ce que** les deux demi-coquilles (500A, 500B) ont une couleur différente de celle du corps (421) de l'accrocheur d'aile (42), notamment une couleur fluorescente.

8. Dispositif d'avitaillement selon l'une des revendications précédentes **caractérisé en ce qu'**un module d'émission (503), vers un récepteur (600) distant, d'un signal (S₁(P)) contenant la valeur du paramètre mesurée par le capteur (501) est également logé dans une (500A) des demi-coquilles, laquelle est réalisée dans un matériau qui n'interfère pas avec le signal émis par le module d'émission, notamment en matériau synthétique, de préférence en matériau plastique.

9. Dispositif d'avitaillement selon l'une des revendications précédentes **caractérisé en ce qu'**il comprend également au moins un organe (701) de détection de la position d'une soupape frontale (422) mobile par rapport au corps (421), ainsi qu'un système électrique ou électronique de transmission, vers une unité de contrôle (507, 508), d'un signal représentatif de la position de la soupape frontale détectée par l'organe de détection et **en ce que** l'organe de détection et le système électrique ou électronique de transmission sont également chacun logés dans l'une (500B) des demi-coquilles.

10. Dispositif d'avitaillement selon l'une des revendications précédentes **caractérisé en ce que** chaque demi-coquille (500A, 500B) comporte au moins un logement creux (551, 552) pour l'agencement d'un composant, parmi le capteur (501), la batterie d'alimentation (502) et, le cas échéant, le module d'émission (503).

11. Procédé de fabrication d'un dispositif d'avitaillement (2) selon l'une des revendications précédentes **caractérisé en ce qu'**il comprend au moins une étape consistant à :
a) monter autour du corps (421) de l'accrocheur d'aile (42) deux demi-coquilles (500A, 500B) dans lesquelles sont logés le capteur de mesure de la valeur d'un paramètre (P, T, Q, V) représentatif de l'écoulement (E) de carburant transitant par l'accrocheur d'aile, ainsi que la batterie (502) d'alimentation électrique de ce capteur.

## Patentansprüche

1. Vorrichtung (2) zum Betanken eines Flugzeugs (400), diese Vorrichtung umfassend eine Leitung (40) zur Zirkulation von Kraftstoff umfasst, deren stromabwärtiges Ende (43) mit einem Flügelhalter (42) für seinen Anschluss an einer Einlassöffnung (301) eines Kraftstoffbehälters (300) des Flugzeugs ausgestattet ist, der Flügelhalter umfassend einen Körper (421), einen Sensor (501) zum Messen des Werts eines Parameters (P, T, Q, V), der repräsentativ für eine Strömung (E) von Kraftstoff ist, die durch den Flügelhalter von der Leitung (40) zur Zirkulation von Kraftstoff zu dem Kraftstoffbehälter (300) des Flugzeugs fließt, und mindestens eine Batterie (502) zur elektrischen Versorgung dieses Sensors, **dadurch gekennzeichnet, dass** der Sensor (501) und die Batterie (502) zur elektrischen Versorgung in zwei Halbschalen (500A, 500B) untergebracht sind, die gemeinsam lösbar um den Körper (421) des Flügelhalters (42) herum montiert sind.

2. Betankungsvorrichtung nach Anspruch 1, **dadurch gekennzeichnet, dass** der Sensor (501) in einer ersten Halbschale (500A) montiert ist und die Batterie (502) in der zweiten Halbschale (500B) montiert ist.

3. Betankungsvorrichtung nach Anspruch 2, **dadurch gekennzeichnet, dass** elektrische Verbindungsorgane zwischen dem Sensor (501) und der Batterie (502) in einem Schnittstellenbereich (515A, 515B) zwischen den zwei Halbschalen (500A, 500B) bereitgestellt sind.

4. Betankungsvorrichtung nach einem der vorherigen Ansprüche, **dadurch gekennzeichnet, dass** jede Halbschale (500A, 500B) zweiteilig ist und einen Hauptteil (500A1, 500B1), der hohle Aufnahmen (551, 552, 557, 558) zum Aufnehmen von elektronischen Komponenten (501, 502, 503, 507, 558) definiert, und einen Deckel (500A2, 500B2) umfasst.

5. Betankungsvorrichtung nach Anspruch 4, **dadurch gekennzeichnet, dass** auf ihren jeweiligen radialen Innenflächen (519A, 519B, 520A, 520B) die Hauptteile (500A1, 500B1) und/oder die Deckel (500A2, 500B2) jeweils mit einer Nut (520A, 520B) zur Aufnahme eines elektrischen Leiters versehen sind.

6. Betankungsvorrichtung nach einem der vorherigen Ansprüche, **dadurch gekennzeichnet, dass** die zwei Halbschalen (500A, 500B) durch Elemente (518A1, 518A2, 518B1, 518B2) zum Festklemmen dieser Halbschalen auf dem Körper (421) des Flügelhalters (42) miteinander verbunden sind.

7. Betankungsvorrichtung nach einem der vorherigen Ansprüche, **dadurch gekennzeichnet, dass** die zwei Halbschalen (500A, 500B) eine Farbe aufweisen, die sich von der Farbe des Körpers (421) des Flügelhalters (42) unterscheidet, insbesondere eine fluoreszierende Farbe.

8. Betankungsvorrichtung nach einem der vorherigen Ansprüche, **dadurch gekennzeichnet, dass** ein Sendemodul (503) eines Signals (Si(P)), das den von dem Sensor (501) gemessenen Wert des Parameters enthält, an einen entfernten Empfänger (600) ebenfalls in einer (500A) der Halbschalen untergebracht ist, die aus einem Material hergestellt ist, das das vom Sendemodul gesendete Signal nicht stört, insbesondere aus synthetischem Material, vorzugsweise aus Kunststoffmaterial.

9. Betankungsvorrichtung nach einem der vorherigen Ansprüche, **dadurch gekennzeichnet, dass** sie auch mindestens ein Element (701) zum Erfassen der Position eines in Bezug auf den Körper (421) beweglichen vorderen Ventils (422) sowie ein elektrisches oder elektronisches Übertragungssystem eines Signals, das repräsentativ für die vom Erfassungselement erfasste Position des vorderen Ventils repräsentativ ist, an eine Steuereinheit (507, 508), und dass das Erfassungselement und das elektrische oder elektronische Übertragungssystem auch jeweils in einer (500B) der Halbschalen untergebracht sind.

10. Betankungsvorrichtung nach einem der vorherigen Ansprüche, **dadurch gekennzeichnet, dass** jede Halbschale (500A, 500B) mindestens eine hohle Aufnahme (551, 552) für die Anordnung einer Komponente des Sensors (501), der Versorgungsbatterie (502) und optional dem Sendemodul (503) aufweist.

11. Verfahren zur Herstellung einer Betankungsvorrichtung (2) nach einem der vorherigen Ansprüche, **dadurch gekennzeichnet, dass** es mindestens einen Schritt umfasst, der aus Folgendem besteht:
a) Montieren von zwei Halbschalen (500A, 500B), in denen der Sensor zum Messen des Werts eines Parameters (P, T, Q, V), der repräsentativ für die Strömung (E) des durch den Flügelhalter fließenden Kraftstoffs ist, sowie die Batterie (502) zur elektrischen Versorgung dieses Sensors untergebracht sind, um den Körper (421) des Flügelhalters (42).

## Claims

1. An aircraft (400) refueling device (2), this device comprising a pipe (40) for the circulation of fuel, the downstream end (43) of which is provided with a wing fastener (42) for the connection thereof onto an intake port (301) of an aircraft fuel tank (300), the wing coupling comprising a body (421), a sensor (501) for measuring the value of a parameter (P, T, Q, V) representative of a flow (E) of fuel passing through the wing coupling, from the pipe (40) for the circulation of fuel to the aircraft fuel tank (300), and at least one battery (502) electrically powering this sensor, **characterized in that** the sensor (501) and the electrical power battery (502) are housed in two half-shells (500A, 500B) mounted together removably around the body (421) of the wing coupling (42).

2. The refueling device according to claim 1, **characterized in that** the sensor (501) is mounted in a first half-shell (500A) and the battery (502) is mounted in the second half-shell (500B).

3. The refueling device according to claim 2, **characterized in that** electrical connection members between the sensor (501) and the battery (502) are provided in an interface area (515A, 515B) between the two half-shells (500A, 500B).

4. The refueling device according to any one of the preceding claims, **characterized in that** each half-shell (500A, 500B) has two parts and comprises a main part (500A1, 500B1), which defines hollow housings (551, 552, 557, 558) for receiving electronic components (501, 502, 503, 507, 558), and a cover (500A2, 500B2).

5. The refueling device of claim 4, **characterized in that**, on their respective inner radial surfaces (519A, 519B, 520A, 520B), the main parts (500A1, 500B1) and/or the covers (500A2, 500B2) are each provided with a groove (520A, 520) for receiving an electrical conductor.

6. The refueling device according to one of the preceding claims, **characterized in that** the two half-shells (500A, 500B) are connected to one another by clamping members (518A1, 518A2, 518B1, 518B2) of these half-shells on the body (421) of the wing coupling (42).

7. The refueling device according to one of the preceding claims, **characterized in that** the two half-shells (500A, 500B) have a different color from that of the body (421) of the wing coupling (42), in particular a fluorescent color.

8. The refueling device according to one of the preceding claims, **characterized in that** a transmission module (503), toward a remote receiver (600), of a signal (S₁(P)) containing the value of the parameter measured by the sensor (501) is also housed in one (500A) of the half-shells, which is made from a material that does not interfere with the signal transmitted by the transmission module, in particular made from a synthetic material, preferably made from plastic.

9. The refueling device according to one of the preceding claims, **characterized in that** it also comprises at least one member (701) for detecting the position of a front valve (422) that is movable relative to the body (421), as well as an electrical or electronic system for sending the control unit (507, 508) a signal representative of the position of the front valve detected by the detection member, while the detection member and the transmission means are also each housed in one (500B) of the half-shells.

10. The refueling device according to one of the preceding claims, **characterized in that** each half-shell (500A, 500B) includes at least one hollow housing (551, 552) for the arrangement of one component among the sensor (501), the battery (502), and if applicable, the transmission module (503).

11. A method for manufacturing a wing coupling (42) for a refueling device (2) according to one of the preceding claims, **characterized in that** it comprises at least one step consisting of:
a) mounting, around the body (421) of the wing coupling (42), two half-shells (500A, 500B) in which are mounted the sensor for measuring the value of a parameter (P, T, Q, V) representative of the flow (E) of fuel passing through this wing coupling, as well as the battery (502) electrically powering this sensor.
